# EUROPEAN PATENT APPLICATION

(11) **EP 4 019 757 A1**
(43) Date of publication of application: **29.06.2022**
(21) Application number: 19943832.6
(22) Date of filing: 23.08.2019
(51) Int. Cl.: F02D 9/00, F02D 35/00, G01B 7/30

(54) **ENGINE THROTTLE DEVICE**

(71) Applicant: MIKUNI CORPORATION, Chiyoda-ku Tokyo 101-0021 (JP)
(72) Inventor: KOMOTO, Yoshinobu, Odawara-shi, Kanagawa 250-0055 (JP)
(74) Representative: SSM Sandmair
(86) International application number: PCT/JP2019/033123
(87) International publication number: WO 2021/038642

(57) **Abstract**

An engine throttle device (1) including a throttle valve (5) supported by a throttle shaft (4) inside a throttle bore (2a, 3a) of a valve body (2, 3) and driven to open and close, and a throttle sensor (11) including an excitation conductor provided at one end of the throttle shaft (4), and a substrate (15) provided with an exciting conductor (13) and a signal detection conductor (14) to face the excitation conductor includes: an excitation conductor unit (12) including an excitation conductor portion (12a) functioning as the excitation conductor, a sensor-side screw portion (12d) provided on a shaft line of the excitation conductor portion (12a), and a sensor-side abutting surface (12e) surrounding the sensor-side screw portion (12d), the excitation conductor unit (12) being integrally formed of a metal material; a shaft-side screw portion (17) formed at one end (4a) of the throttle shaft (4) and screwed to the sensor-side screw portion (12d); and a shaft-side abutting surface (18) formed at the one end (4a) to surround the shaft-side screw portion (17) and abutting the sensor-side abutting surface (12e) when the shaft-side screw portion (17) is screwed to the sensor-side screw portion (12d).

## Description

### Technical Field

The present invention relates to a throttle device provided with an inductive-type throttle sensor for detecting a throttle position.

### Background Art

The amount of air taken into an engine is adjusted by a throttle device, and a position of a throttle valve is used as one of items of information to appropriately drive the engine. Thus, the throttle device is provided with a throttle sensor for detecting the throttle position, and for example, a throttle device described in Patent Document 1 is provided with an inductive-type throttle sensor.

The technique in Patent Document 1 will now be described. A throttle valve is supported by a throttle shaft inside a throttle bore formed in a valve body, and the throttle valve is driven along with the throttle shaft via a gear train by a motor to open or close such that the amount of air taken into an engine is adjusted. The throttle sensor includes a holder provided with an excitation conductor and a substrate provided with an exciting conductor and a signal detection conductor as a whole. A proximal end surface of the holder is coupled to an end portion of the throttle shaft, and the substrate is disposed in such a posture that the exciting conductor and the signal detection conductor are caused to face the excitation conductor provided at a distal end surface of the holder. The holder is produced by insert-molding a synthetic resin material along with the excitation conductor, and the end portion of the throttle shaft is coupled to the proximal end surface of the holder through a welding process.

### Prior Art Document

### Patent Document

Patent Document 1: Japanese Patent Laid-Open No. 2017-67580

### Summary of the Invention

### Problems to be solved by the Invention

However, the throttle device in Patent Document 1 has three problems described below since the welding process is used to couple the holder to the throttle shaft.

The first problem is that a manufacturing process is complicated. It is necessary to maintain the end portion of the throttle shaft and the holder in a normal positional relationship regardless of which of welding processes such as thermal welding, ultrasonic welding, and high-frequency welding is employed, and a jig preparation operation performed to do so requires considerable effort. In addition, it is necessary to prepare a dedicated welding device and to strictly manage welding conditions, and all these factors lead to a complicated process for manufacturing the throttle device and thus to a significant increase in manufacturing cost.

The second problem is that satisfactory detection accuracy of the throttle sensor cannot be achieved. In order to achieve high detection accuracy, it is important to maintain the throttle shaft and the excitation conductor in a normal positional relationship. Although the excitation conductor is disposed on the holder with high position accuracy through insert molding, it is difficult to state that satisfactory accuracy of positioning the holder and the throttle shaft is achieved by a jig for the welding process as compared with the position accuracy achieved by the insert molding. As a result, it becomes difficult to maintain the throttle shaft and the excitation conductor in a normal positional relationship, which may cause degradation of detection accuracy of the throttle sensor.

The third problem is that durability is low at a coupling part between the throttle shaft and the holder. Since the excitation conductor is integrated with the holder in the process of forming the holder from a molten resin through insert molding, interfaces thereof fixedly adhere to each other. On the other hand, the coupling part of the holder is just partially melted in the welding process, the melting temperature is low, and it is thus not possible to obtain a sufficient adhesive force at the interface with the end portion of the throttle shaft. Moreover, since the melting corresponds to re-melting after the insert molding, resin strength has also been degraded due to heat-induced deterioration. There is thus a concern that the interface at the coupling part peels off due to entering rainwater or the like or the coupling part is damaged due to degradation of the resin strength, and there is room for improvement in regard to durability.

The present invention was made in order to solve such problems, and an object of the present invention is to provide an engine throttle device provided with a throttle sensor with more satisfactory durability that can be manufactured at low cost and can realize high detection accuracy.

### Means for Solving the Problems

In order to achieve the above object, an aspect of the present invention is directed to an engine throttle device including a throttle valve supported by a throttle shaft inside a throttle bore of a valve body and driven to open and close, and a throttle sensor including an excitation conductor provided at one end of the throttle shaft, and a substrate provided with an exciting conductor and a signal detection conductor to face the excitation conductor, the engine throttle device including: an excitation conductor unit including an excitation conductor portion functioning as the excitation conductor, a sensor-side screw portion provided on a shaft line of the excitation conductor portion, and a sensor-side abutting surface surrounding the sensor-side screw portion, the excitation conductor unit being integrally formed of a metal material; a shaft-side screw portion formed at one end of the throttle shaft and screwed to the sensor-side screw portion of the excitation conductor unit; and a shaft-side abutting surface formed at the one end of the throttle shaft to surround the shaft-side screw portion and abutting the sensor-side abutting surface when the shaft-side screw portion is screwed to the sensor-side screw portion.

In another aspect, centering engagement portions engaged with each other to maintain the excitation conductor unit and the throttle shaft in a positional relationship in which shaft lines conform to each other may be formed on the sensor-side abutting surface and the shaft-side abutting surface.

In another aspect, the excitation conductor unit may include a tool engagement portion with which a tool is engaged for a tightening operation.

In another aspect, the sensor-side screw portion may be a male screw projecting toward a side of the throttle shaft, and the shaft-side screw portion may be a female screw corresponding to the male screw.

In another aspect, the sensor-side screw portion may be a female screw opened toward a side of the throttle shaft, and the shaft-side screw portion may be a male screw corresponding to the female screw.

### Advantageous Effects of the Invention

According to the engine throttle device in the present invention, it is possible to include a throttle sensor with more satisfactory durability that can be manufactured at low cost and can realize high detection accuracy.

### Brief Description of the Drawings

FIG. 1 is a perspective view illustrating an engine throttle device according to an embodiment.
FIG. 2 is an exploded perspective view illustrating a location of a throttle sensor in a throttle device according to a first embodiment.
FIG. 3 is a sectional view along the line III-III in FIG. 2.
FIG. 4 is an exploded perspective view illustrating a relationship between a throttle shaft and an excitation conductor unit.
FIG. 5 is a view from the arrow A in FIG. 4 illustrating the excitation conductor unit alone.
FIG. 6 is a sectional view corresponding to FIG. 3 and illustrating another example in which a holder-side abutting surface and a shaft-side abutting surface are caused to establish spigot joint.
FIG. 7 is a sectional view corresponding to FIG. 3 and illustrating another example in which the holder-side abutting surface and the shaft-side abutting surface are caused to establish tapered joint.
FIG. 8 is a perspective view corresponding to FIG. 4 and illustrating another example in which a hexagonal hole is formed in an excitation conductor portion.
FIG. 9 is a sectional view corresponding to FIG. 3 and illustrating a location of a throttle sensor in a throttle device according to a second embodiment.
FIG. 10 is an exploded perspective view illustrating a relationship between a throttle shaft and an excitation conductor unit.
FIG. 11 is a view from the arrow B in FIG. 10 illustrating the excitation conductor unit alone.
FIG. 12 is a perspective view corresponding to FIG. 11 and illustrating another example in which a fastening portion has a hexagonal sectional shape.

### Mode for Carrying out the Invention

Hereinafter, an embodiment in which the present invention is specifically implemented as a throttle device for a four-cylinder engine for a motorcycle will be described.

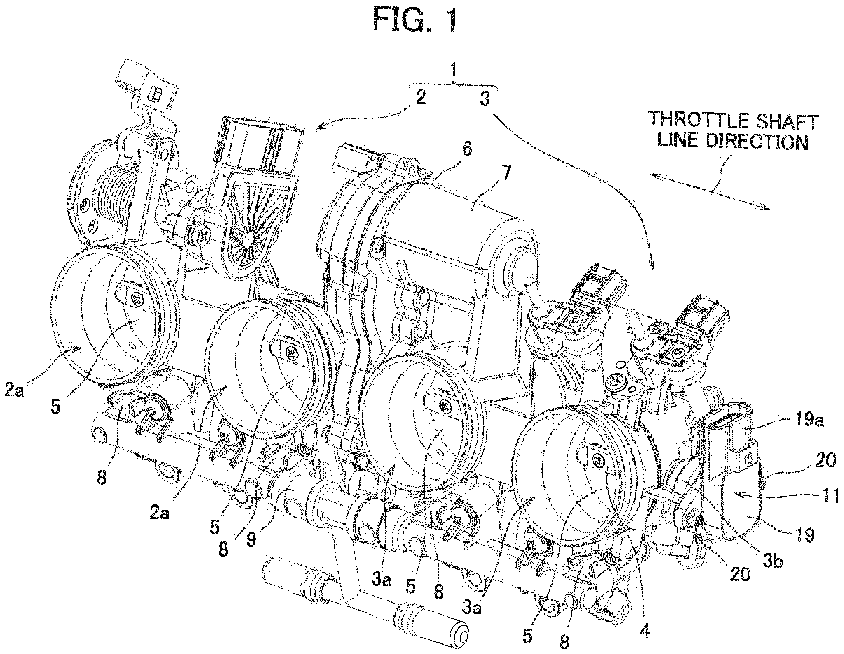

A throttle device 1 according to the present embodiment is configured to be as an electronic control type in which a throttle valve is driven by a motor to open and close, and as illustrated in FIG. 1, the throttle device 1 includes first and second valve bodies 2 and 3 coupled to each other and each having a pair of throttle bores 2a or 3a. Although not illustrated in the drawing, a hose from an air cleaner is connected to one end of each of the throttle bores 2a and 3a corresponding to the left side in FIG. 1, and an intake manifold of an engine is connected to the other end on the opposite side in a mounted state on a motorcycle.

One throttle shaft 4 penetrates through and is rotatably supported by each of the throttle bores 2a and 3a of the first and second valve bodies 2 and 3, and a throttle valve 5 is secured to the throttle shaft 4 inside each of the throttle bores 2a and 3a. A gear casing 6 is provided between both the valve bodies 2 and 3, the throttle shaft 4 is driven to rotate by a motor 7 disposed on one side of the gear casing 6 via a gear train, which is not illustrated, inside the gear casing 6 and the amount of air taken into the engine is adjusted in accordance with opening and closing of each throttle valve 5. Hereinafter, the direction along the throttle shaft 4 will be referred to as a throttle shaft line direction.

Fuel injection valves 8 are attached below the first and second valve bodies 2 and 3 in such a posture that distal ends thereof are caused to face the throttle bores 2a and 3a, and a pressurized fuel is supplied from a fuel pump, which is not illustrated, via delivery pipe 9. Each fuel injection valve 8 is opened or closed in synchronization with a combustion cycle of each cylinder of the engine, and in accordance with this, fuel is injected into the intake manifold of the corresponding cylinder.

The throttle device 1 configured as described above is provided with an inductive-type throttle sensor to detect the position of the throttle valve. For example, the throttle sensor described in Patent Document 1 is adapted such that the holder made of the synthetic resin and including the excitation conductor insert-molded therewith is coupled to the end portion of the throttle shaft, employs a welding process as a coupling method, and thus has a problem of a complicated manufacturing process and degraded detection accuracy and durability.

Thus, first and second embodiments of the present invention will be described below as a configuration in which the excitation conductor is fastened directly to one end 4a of the throttle shaft 4 with the holder eliminated therefrom.

### [First embodiment]

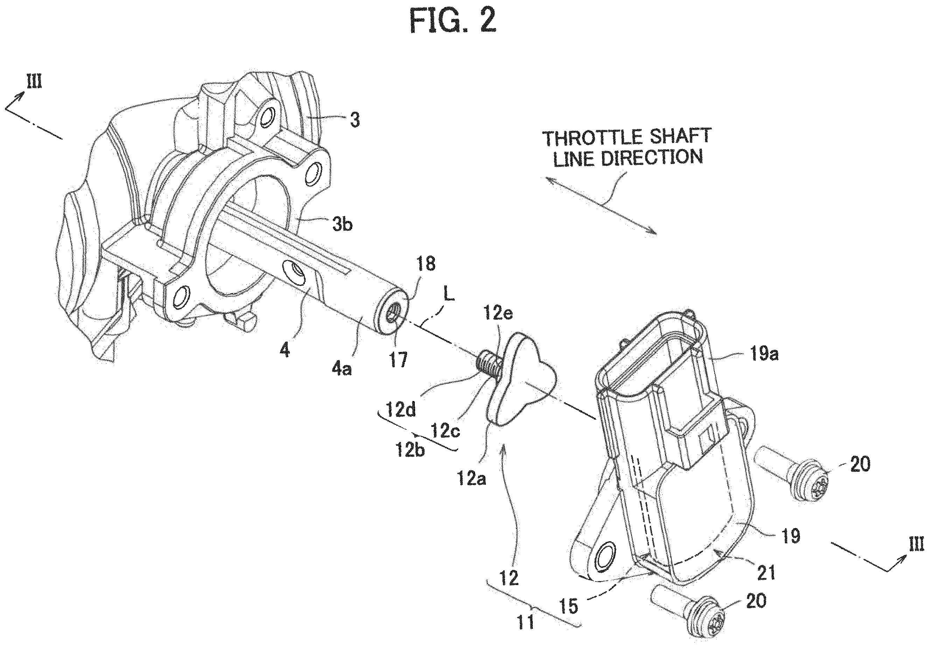

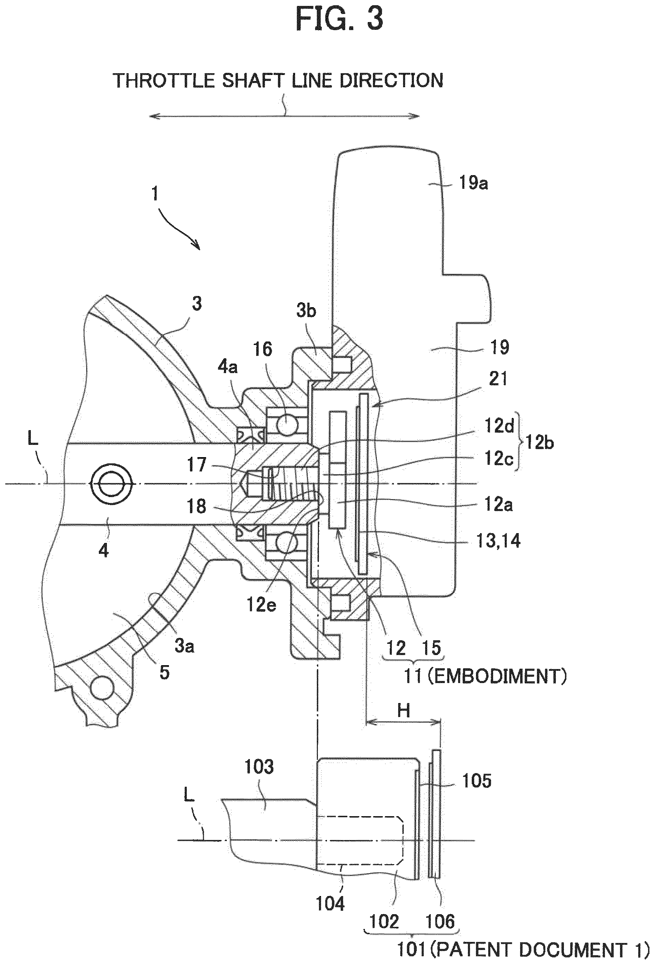

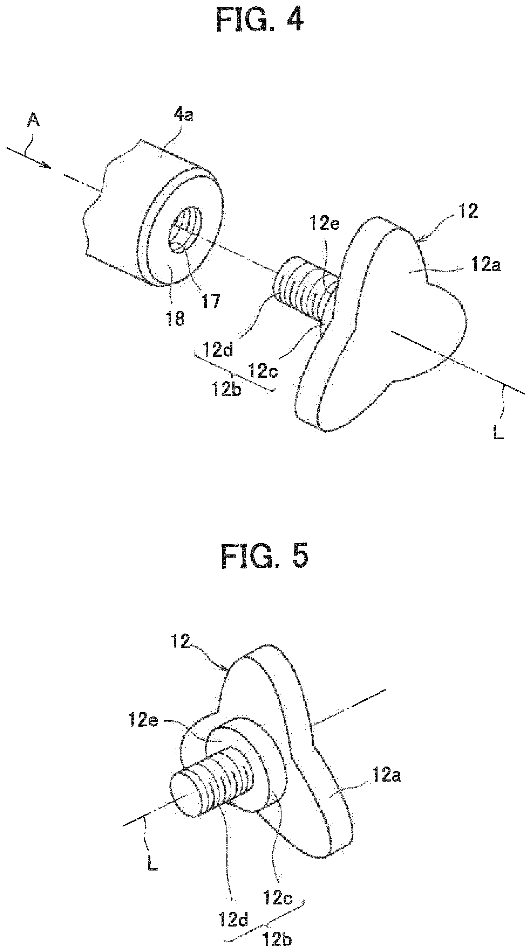

The first embodiment will be described on the basis of FIGS. 1 to 5. As described above, the excitation conductor of the throttle sensor 11 also has a function of fastening to the throttle shaft 4 in addition to the original function of detecting the throttle position and will thus be referred to as an excitation conductor unit 12 below. As illustrated in FIGS. 2 and 3, the throttle sensor 11 includes the excitation conductor unit 12 and a substrate 15 including an exciting conductor 13, a signal detection conductor 14, and a control circuit, which is not illustrated.

The excitation conductor unit 12 includes an excitation conductor portion 12a with a function of detecting the throttle position and a fastening portion 12b with a function of fastening to the throttle shaft 4 and is integrally formed of a metal material with conductivity. The excitation conductor portion 12a has a plate shape with a thickness of about 2 mm to 3 mm and also has a shape obtained by causing three equally divided parts (intervals of 120°) around a shaft line L at the center to expand in a substantially elliptical shape in an outer circumferential direction when seen from the throttle shaft line direction. Note that the shape of the excitation conductor portion 12a is not limited thereto, may be arbitrarily changed, and may be a shape obtained by causing two equally divided parts (intervals of 180°) or four equally divided parts (intervals of 90°) to expand in the outer circumferential direction, for example.

The fastening portion 12b is provided on a surface of the side of the throttle shaft 4 of the excitation conductor portion 12a and includes a cylindrical abutting base 12c and a male screw 12d. The abutting base 12c is formed on the excitation conductor portion 12a, the male screw 12d is formed on an end surface of the abutting base 12c to project toward the side of the throttle shaft 4, and the abutting base 12c and the male screw 12d are continuous with each other on the shaft line L of the excitation conductor portion 12a. Since the outer diameter of the male screw 12d is smaller than the outer diameter of the abutting base 12c, the end surface of the abutting base 12c has a flat annular shape surrounding the male screw 12d, and the end surface will be referred to as a sensor-side abutting surface 12e below.

Note that although the excitation conductor unit 12 may be manufactured by any method, a workpiece made of carbon steel is formed into an overall rough shape through cold forging, the male screw 12d is then formed through rolling, the excitation conductor portion 12a is formed through a cutting process, and the excitation conductor unit 12 is finished. In this manner, the excitation conductor portion 12a and the fastening portion 12b are formed of the same metal material.

On the other hand, a female screw 17 is formed at the one end 4a of the throttle shaft 4 to correspond to the male screw 12d of the excitation conductor unit 12, and a flat annular shaft-side abutting surface 18 is formed to surround the female screw 17. In the present embodiment, the male screw 12d of the excitation conductor unit 12 functions as the sensor-side screw portion in the present invention while the female screw 17 of the throttle shaft 4 functions as the shaft-side screw portion in the present invention.

Next, an assembled state of the excitation conductor unit 12 in the throttle device 1 will be described. The one end 4a of the throttle shaft 4 is supported by a bearing 16 and projects to the inside of an annular flange portion 3b formed at a side portion of the second valve body 3, a sensor case 19 is fastened to the flange portion 3b with a pair of screws 20, and a sensor accommodation chamber 21 is defined therein. Note that for easy understanding, FIG. 2 illustrates a state in which the throttle shaft 4 is slightly drawn out from the inside of the flange portion 3b.

The excitation conductor unit 12 is disposed on the side of the flange portion 3b inside the sensor accommodation chamber 21, and the male screw 12d is screwed into the female screw 17 at the one end 4a of the throttle shaft 4. In this manner, the excitation conductor unit 12 is fastened to the one end 4a of the throttle shaft 4 in a state in which the sensor-side abutting surface 12e is caused to abut on the shaft-side abutting surface 18. The substrate 15 of the throttle sensor 11 is secured on the side of the sensor case 19 inside the sensor accommodation chamber 21, and the exciting conductor 13 and the signal detection conductor 14 formed on one side surface of the substrate 15 face the excitation conductor portion 12a of the excitation conductor unit 12 with a minute gap. Once the excitation conductor unit 12 rotates integrally with the throttle shaft 4, a positional change around the shaft line L at the center occurs between the excitation conductor portion 12a on the side of the excitation conductor unit 12 and the exciting conductor 13 and the signal detection conductor 14 on the side of the substrate 15 in accordance with the rotation angle.

Note that the operation of fastening the throttle shaft 4 and the excitation conductor unit 12 is performed in the following procedure, for example. The first and second valve bodies 2 and 3 are coupled to each other, the throttle shaft 4 is assembled therewith in advance, and a state in which rotation of the throttle shaft 4 is restricted by a stopper, which is not illustrated, at a fully opened position and a fully closed position is achieved. First, the excitation conductor unit 12 is gripped, and the male screw 12d is screwed into the female screw 17 at the one end 4a of the throttle shaft 4. Rotation of the throttle shaft 4 is restricted by the stopper trough a tightening operation, and if the tightening operation is further continued, then the sensor-side abutting surface 12e and the shaft-side abutting surface 18 abut on each other and can be completely fastened to each other. It is a matter of course that the fastening operation is not limited to the aforementioned procedure, and the throttle shaft 4 alone may achieve the fastening to the excitation conductor unit 12, for example.

Since principles of the inductive-type throttle sensor 11 are known from Patent Document 1 or Japanese Patent No. 4809829, for example, only outline will be described. Power from a side of a vehicle body is supplied to the substrate 15 via a connector 19a provided on one side of the sensor case 19, and a current is excited by the excitation conductor portion 12a of the excitation conductor unit 12 in accordance with an AC current flowing through the exciting conductor 13. An AC current is excited by the excited current at the signal detection conductor 14 of the substrate 15, and a throttle position signal correlated with a rotation angle and thus the throttle position of the throttle shaft 4 is generated by the control circuit on the basis of the AC current and is then output to the side of the vehicle body via the connector 19a.

In the throttle sensor 11 of the throttle device 1 according to the present embodiment configured as described above, the male screw 12d for the fastening is formed along with the excitation conductor portion 12a when the excitation conductor unit 12 is manufactured, and therefore, no additional operation occurs. According to the present embodiment, it is thus possible to simplify the manufacturing process and to manufacture the throttle sensor 11 at low cost.

Although detection accuracy of the throttle sensor 11 depends on the screwing between the male screw 12d and the female screw 17 in the present embodiment, high positional accuracy of the male screw 12d relative to the excitation conductor portion 12a is achieved by the entire excitation conductor unit 12 being integrally formed.

In addition, since the male screw 12d of the excitation conductor unit 12 and the female screw 17 of the throttle shaft 4 achieve screwing between metal materials, high positional accuracy is achieved therebetween. Specifically, a radial direction around the shaft line L at the center is positioned in a normal relationship through the screwing between the male screw 12d and the female screw 17, and the throttle shaft line direction is positioned in a normal relationship through mutual abutting between the sensor-side abutting surface 12e and the shaft-side abutting surface 18. Therefore, the excitation conductor unit 12 and the throttle shaft 4 are coupled to each other with high positional accuracy. As a result, according to the present embodiment, it is possible to maintain the excitation conductor portion 12a and the throttle shaft 4 in a normal positional relationship and to improve detection accuracy of the throttle sensor 11.

On the other hand, in regard to durability of the coupling part between the throttle shaft 4 and the excitation conductor unit 12, significantly high strength is achieved in the present embodiment since the excitation conductor portion 12a and the male screw 12d of the fastening portion 12b are integrally produced as the excitation conductor unit 12 using a metal material. Also, the male screw 12d of the excitation conductor unit 12 and the female screw 17 of the throttle shaft 4 are coupled to each other through screwing between metal materials with high strength. As a result, according to the present embodiment, it is possible to avoid a situation in which rainwater or the like enters the interface at the coupling part and the coupling part peels off or a situation in which resin strength is degraded and the coupling part is damaged in advance, and to improve durability of the throttle sensor 11.

According to the present embodiment, the excitation conductor unit 12 is fastened directly to the throttle shaft 4, and it is thus possible to reduce a space that the throttle sensor 11 including the substrate 15 occupies in the throttle shaft line direction by a dimension H and thereby to reduce the throttle device 1 in size. Moreover, this leads to a decrease in the number of components, and this factor contributes to further cost reduction.

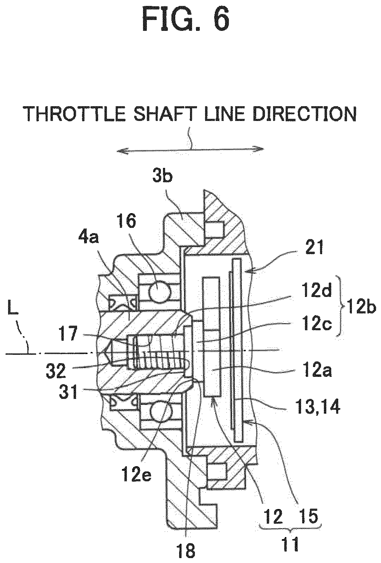

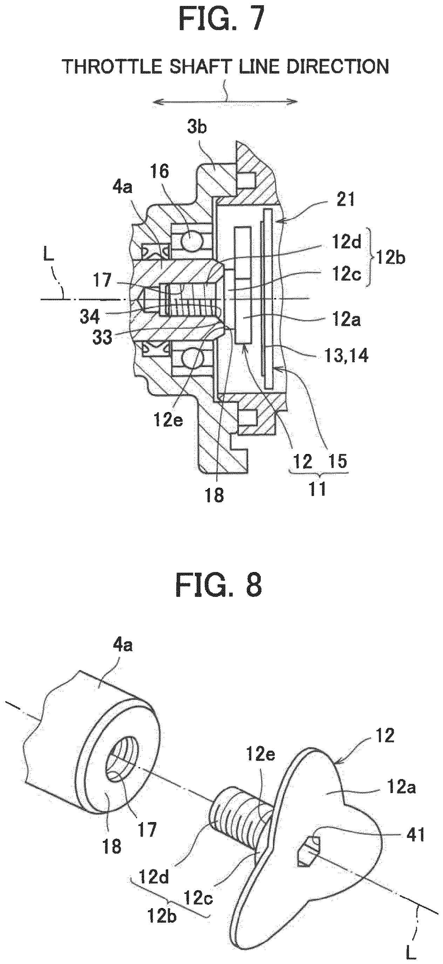

Incidentally, although the excitation conductor unit 12 and the throttle shaft 4 are positioned in the radial direction around the shaft line L at the center through the screwing between the male screw 12d and the female screw 17 in the present embodiment, there may be a case in which slight deviation occurs between mutual shaft lines L due to some rattling between screw threads. Thus, spigot joint or tapered joint may be used to cause the shaft lines L to conform to each other. As illustrated in FIG. 6, for example, a spigot projecting portion 31 may be formed on the sensor-side abutting surface 12e, and a spigot recessed portion 32 may be formed on the shaft-side abutting surface 18. Alternatively, as illustrated in FIG. 7, a tapered projecting portion 33 may be formed on the sensor-side abutting surface 12e, and a tapered recessed portion 34 may be formed on the shaft-side abutting surface 18. It is a matter of course that the relationship of projecting and recessed portions in each example may be reversed. Since the shaft lines L of the excitation conductor unit 12 and the throttle shaft 4 conform to each other through the engagement between the projecting portions 31, 33 and the recessed portions 32, 34, it is possible to further improve detection accuracy of the throttle sensor 11. In the present embodiment, the projecting portions 31, 33 and the recessed portions 32, 34 function as the centering engagement portions in the present invention.

Although the excitation conductor unit 12 is gripped with hands and is fastened to the throttle shaft 4 in the present embodiment, a tool may be used to perform the tightening operation. In a case in which a hexagonal wrench is used, for example, a hexagonal hole 41 is formed in the excitation conductor portion 12a as illustrated in FIG. 8, and a distal end of the hexagonal wrench is engaged with the hexagonal hole 41 to achieve the fastening with the throttle shaft 4. Since there is no need to grip the excitation conductor unit 12 with hands, no problem occurs even if the thickness of the excitation conductor portion 12a is reduced to about 1 mm, for example. With such a thickness, it is possible to form the excitation conductor portion 12a through a shearing process that requires less efforts than the cutting process when the excitation conductor unit 12 is manufactured. The hexagonal hole 41 can be formed at the same time when the workpiece is cold-forged into the rough shape, and it is thus possible to further reduce the manufacturing cost. In this additional example, the hexagonal hole 41 functions as the tool engagement portion in the present invention.

### [Second embodiment]

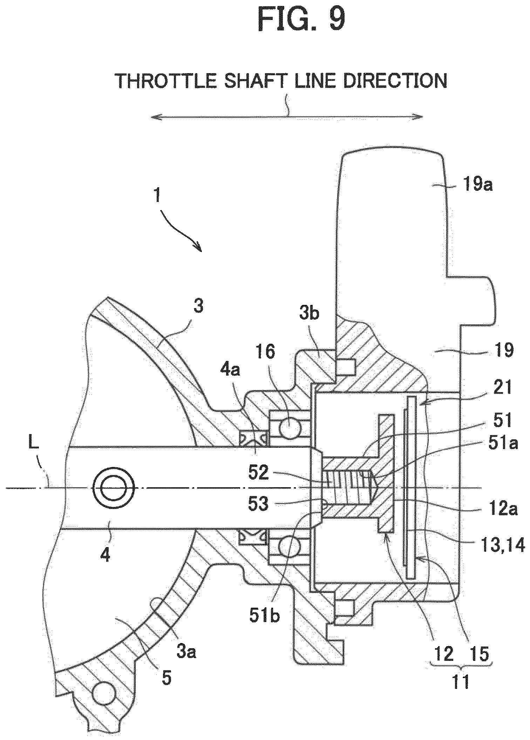

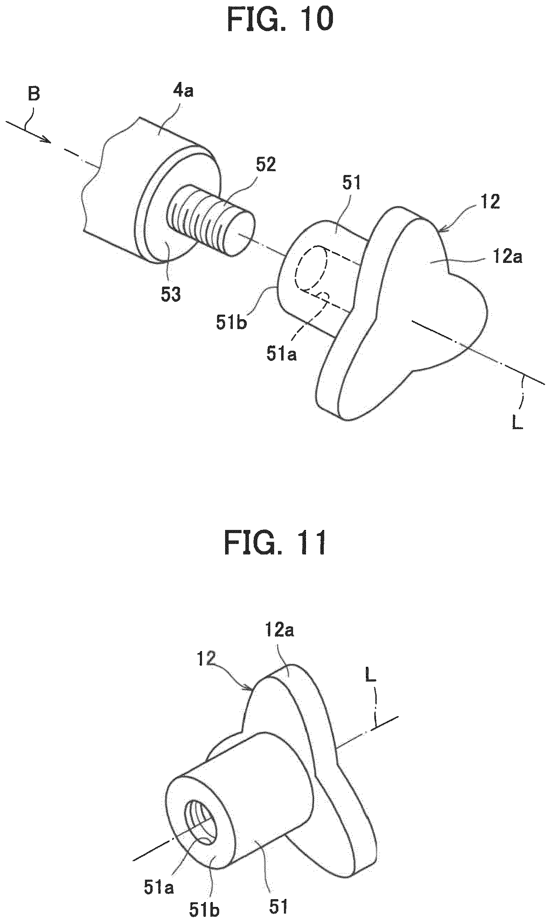

Next, the second embodiment will be described on the basis of FIGS. 1 and 9 to 11. A difference from the first embodiment is that a female screw 51a is formed instead of the male screw 12d in the excitation conductor unit 12 and a male screw 52 is formed instead of the female screw 17 at the one end 4a of the throttle shaft 4, and the other configurations are the same as those in the first embodiment. Thus, the same reference signs will be applied to parts with common configurations, description thereof will be omitted, and the difference will be mainly described.

A fastening portion 51 of an excitation conductor unit 12 has a cylindrical shape, the female screw 51a opened to a side of a throttle shaft 4 is formed on a surface thereof on the side of the throttle shaft 4, and a flat annular region surrounding the female screw 51a is caused to serve as a sensor-side abutting surface 51b. Also, a male screw 52 is formed at one end 4a of the throttle shaft 4 to correspond to the female screw 51a on a side of an excitation conductor unit 12, and a flat annular region surrounding the male screw 52 is caused to serve as a shaft-side abutting surface 53. In the present embodiment, the female screw 51a of the excitation conductor unit 12 functions as the sensor-side screw portion in the present invention, and the male screw 52 of the throttle shaft 4 functions as the shaft-side screw portion in the present invention.

An operation of fastening the throttle shaft 4 and the excitation conductor unit 12 is performed in a procedure similar to that in the first embodiment. After completion of the fastening, a state in which the sensor-side abutting surface 51b and the shaft-side abutting surface 53 abut on each other is achieved through screwing between the female screw 51a and the male screw 52. It is possible to achieve the various effects regarding the manufacturing process, the detection accuracy, the durability, size reduction, and the like, which have been described in the first embodiment, in the second embodiment as well.

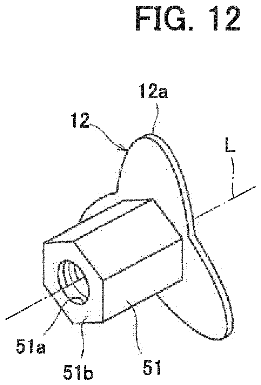

Incidentally, the fastening portion 51 in the present embodiment has to have a dimension in the throttle shaft line direction to some extent to secure a sufficient length of the female screw 51a. Thus, an outer side surface of such a fastening portion 51 may be used for engagement with a tool. For example, the outer side surface of the fastening portion 51 may be formed to have a hexagonal sectional shape as illustrated in Fig. 12, and a spanner may be engaged therewith to tighten the excitation conductor unit 12. Since it is not necessary to grip the excitation conductor unit 12 with hands similarly to the description based on FIG. 8, it is possible to reduce the thickness of the excitation conductor portion 12a and to reduce manufacturing cost. It is a matter of course that the hexagonal hole 41 illustrated in FIG. 8 may be formed instead of the above outer side surface in the excitation conductor portion 12a. In the additional examples, the fastening portion 51 with the hexagonal sectional shape or the hexagonal hole 41 functions as the tool engagement portion in the present invention.

Further, spigot joint or tapered joint may be applied to the present embodiment as well in order to prevent rattling between the screw threads of the female screw 51a and the male screw 52.

Aspects of the present invention are not limited to the embodiments. Although each of the aforementioned embodiments is implemented as the throttle device 1 for an engine for a motorcycle, the present invention is not limited thereto. For example, the present invention may be implemented as a throttle device targeted at an engine mounted as a power source in an all-terrain vehicle (ATV) or an engine for a power generator, for example.

Although each of the aforementioned embodiments is implemented as the electronic control-type throttle device 1 that drives the throttle valve 5 by the motor 7 to open or close, the present invention is not limited thereto. For example, the present invention may be targeted at a machine-type throttle device that transmits a driver's throttle operation to a throttle shaft via a wire or the like and may be implemented as a throttle sensor for detecting the throttle position thereof.

### Explanation of Reference Signs

1 Throttle device
2 First valve body
2a, 3a Throttle bore
3 Second valve body
4 Throttle shaft
4a One end
5 Throttle valve
11 Throttle sensor
12 Excitation conductor unit
12a Excitation conductor portion
12d Male screw (sensor-side screw portion)
12e, 51b Sensor-side abutting surface
13 Exciting conductor
14 Signal detection conductor
15 Substrate
17 Female screw (shaft-side screw portion)
18, 53 Shaft-side abutting surface
31, 33 Projecting portion (centering engagement portion)
32, 34 Recessed portion (centering engagement portion)
41 Hexagonal hole (tool engagement portion)
51 Fastening portion (tool engagement portion)
51a Female screw (sensor-side screw portion)
52 Male screw (shaft-side screw portion)

## Claims

1. An engine throttle device including a throttle valve supported by a throttle shaft inside a throttle bore of a valve body and driven to open and close, and a throttle sensor including an excitation conductor provided at one end of the throttle shaft, and a substrate provided with an exciting conductor and a signal detection conductor to face the excitation conductor, the engine throttle device comprising:
an excitation conductor unit including an excitation conductor portion functioning as the excitation conductor, a sensor-side screw portion provided on a shaft line of the excitation conductor portion, and a sensor-side abutting surface surrounding the sensor-side screw portion, the excitation conductor unit being integrally formed of a metal material;
a shaft-side screw portion formed at one end of the throttle shaft and screwed to the sensor-side screw portion of the excitation conductor unit; and
a shaft-side abutting surface formed at the one end of the throttle shaft to surround the shaft-side screw portion and abutting the sensor-side abutting surface when the shaft-side screw portion is screwed to the sensor-side screw portion.

2. The engine throttle device according to claim 1, wherein centering engagement portions engaged with each other to maintain the excitation conductor unit and the throttle shaft in a positional relationship in which shaft lines conform to each other are formed on the sensor-side abutting surface and the shaft-side abutting surface.

3. The engine throttle device according to claim 1 or 2, wherein the excitation conductor unit includes a tool engagement portion with which a tool is engaged for a tightening operation.

4. The engine throttle device according to any one of claims 1 to 3,
wherein the sensor-side screw portion is a male screw projecting toward a side of the throttle shaft, and
the shaft-side screw portion is a female screw corresponding to the male screw.

5. The engine throttle device according to any one of claims 1 to 3,
wherein the sensor-side screw portion is a female screw opened toward a side of the throttle shaft, and
the shaft-side screw portion is a male screw corresponding to the female screw.
